# EUROPÄISCHE PATENTSCHRIFT

(11) **EP 3 285 961 B1**
(45) Veröffentlichungstag und Bekanntmachung des Hinweises auf die Patenterteilung: **20.02.2019**
(21) Anmeldenummer: 16719021.4
(22) Anmeldetag: 08.04.2016
(51) Int. Cl.: B23Q 17/09, G01B 11/24, G05B 19/4065

(54) **VERFAHREN UND VORRICHTUNG ZUR MATERIALABTRAGENDEN BEARBEITUNG EINES WERKZEUGES**
METHOD AND DEVICE FOR MACHINING A TOOL BY REMOVING MATERIAL
PROCÉDÉ ET DISPOSITIF D'USINAGE D'UN OUTIL PAR ENLÈVEMENT DE MATIÈRE

(30) Priorität: 20.04.2015 DE 102015105999
(43) Veröffentlichungstag der Anmeldung: 28.02.2018
(73) Patentinhaber: Walter Maschinenbau GmbH, 72072 Tübingen (DE)
(72) Erfinder: WENKE, Oliver, 31535 Neustadt (DE); MAIER, Manfred, 72119 Ammerbuch (DE); PLÜSS, Christoph, CH-3400 Burgdorf (DE)
(74) Vertreter: Rüger Abel
(86) Internationale Anmeldenummer: PCT/EP2016/057685
(87) Internationale Veröffentlichungsnummer: WO 2016/169782

(56) Entgegenhaltungen:
- EP-A1- 1 792 687
- US-A1- 2015 028 007
- FUSSELL B K ET AL: "Modeling of cutting geometry and forces for 5-axis sculptured surface machining", COMPUTER AIDED DESIGN, ELSEVIER PUBLISHERS BV., BARKING, GB, Bd. 35, Nr. 4, 1. April 2003 (2003-04-01), Seiten 333-346, XP004905724, ISSN: 0010-4485, DOI: 10.1016/S0010-4485(02)00055-6

## Beschreibung

Die Erfindung betrifft ein Verfahren sowie eine Vorrichtung zur materialabtragenden Bearbeitung eines Werkzeugs. Das Vermessen von Werkzeugen ist bei der Herstellung von neuen Werkzeugen oder bei der Nachbearbeitung von gebrauchten Werkzeugen, die bereits einem gewissen Verschleiß unterworfen sind, von Bedeutung. Zur Qualitätskontrolle werden beispielsweise Messungen vorgenommen um zu prüfen, ob das Werkzeug bzw. dessen Kenngrößen noch innerhalb eines vorgegebenen Toleranzbereiches liegt. Welche Kenngrößen im Einzelnen ermittelt und geprüft werden, hängt vom jeweiligen Werkzeugtyp ab. Beispielsweise können bei spanabhebenden, um ihre Längsachse rotierenden Werkzeugen Kenngrößen wie der Spanwinkel, der Freiwinkel, der Teilungswinkel zwischen in Umfangsrichtung benachbarten Schneiden, die Länge des Werkzeuges, der Kerndurchmesser, der Drallwinkel oder die Drallsteigung oder eine beliebige Kombination hiervon erfasst und geprüft werden.

Es sind verschiedene Messverfahren und Messmaschinen bekannt, mit denen ein Werkzeug berührungslos und/oder durch mechanisches Antasten erfasst und die Kenngrößen gemessen oder berechnet oder gemessen werden können. Allerdings sind diese Verfahren sehr aufwendig, so dass sie bei der Herstellung von neuen Werkzeugen und auch bei der Nachbearbeitung nur dann eingesetzt werden, wenn es erforderlich ist, insbesondere um den Zeitaufwand so gering wie möglich zu halten.

DE 10 2012 106 139 A1 beschreibt ein Verfahren zur Ermittlung von Werkzeugverschleiß in einer Werkzeugmaschine für die geometrisch bestimmte Zerspanung. Dort wird der Verschleiß eines Werkzeuges mit einer optischen Aufnahmeeinrichtung erfasst. Der sich daraus ergebende Ist-Zustand des Werkzeugs wird mit einem vorgegebenen Sollzustand verglichen und daraus eine Verschleißgröße ermittelt. Anhand der Verschleißgröße kann dann die Bewegung des Werkzeuges in der Bearbeitungsmaschine geändert werden, so dass an einem Werkstück der gewünschte Materialabtrag erreicht wird.

US 2015/028007 A1 beschreibt ein Verfahren und eine Einrichtung zum maschinellen Bearbeiten eines Rotationswerkzeugs, das eine Mehrzahl von Schneidkörpern aufweist. Das Rotationswerkzeug wird abgerichtet, indem Schneidkörper entfernt oder bearbeitet werden, so dass sie nicht aus der gewünschten Sollkontur herausragen, die durch einen Mindestabstand und einen Maximalabstand von der Drehachse des Rotationswerkzeugs definiert ist. Bei dieser Bearbeitung können auch weitere Parameter berücksichtigt werden, wie etwa die Größe einer Schneidkörperfläche auf der Einhüllenden, Kantenlängen oder andere Parameter.

Es kann als Aufgabe der Erfindung angesehen werden, ein Verfahren bzw. eine Vorrichtung zu schaffen, mit der sich eine Werkzeugherstellung bzw. eine Werkzeugnachbearbeitung optimieren lässt.

Diese Aufgabe wird durch ein Verfahren mit den Merkmalen des Patentanspruches 1 sowie eine Vorrichtung mit den Merkmalen des Patentanspruches 16 gelöst.

Erfindungsgemäß ist vorgesehen, dass ein Werkzeug zunächst dreidimensional gemessen wird und daraus ein dreidimensionales virtuelles Werkzeugmodell erzeugt wird. Die dreidimensionale Messung kann durch einen 3D-Scanner, beispielsweise einen Laserscanner oder eine andere geeignete 3D-Messeinrichtung ausgeführt werden. Die 3D-Messeinheit erzeugt Messdaten, insbesondere in Form einer Punktwolke, die die Kanten und Flächen des gemessenen Werkzeuges beschreiben. Die Punktwolke kann das virtuelle Werkzeugmodell darstellen. Es ist auch möglich, die Punktwolke teilweise oder vollständig durch Verarbeitungsoperationen zu bearbeiten. Beispielsweise kann durch Bildung von Maschen bzw. durch ein Gittermodell und durch Texturierung der Maschen bzw. des Gittermodells ein besser darstellbares virtuelles Werkzeugmodell aus der Punktwolke erzeugt werden. Es ist außerdem möglich, für die Visualisierung ein flächiges Werkzeugmodell aus der Punktwolke zu erzeugen. Ferner besteht die Möglichkeit, die Punktwolke durch bekannte Algorithmen oder mathematische Verfahren zu bearbeiten und nicht benötigte Punkte der Punktwolke und/oder offensichtlich fehlerhafte Punkte zu eliminieren.

Nach dem Erzeugen des dreidimensionalen virtuellen Werkzeugmodells kann daraus bei einer vorteilhaften Ausführung wenigstens ein das gemessene Werkzeug charakterisierender Modellparameter ermittelt werden. Das Ermitteln des Modellparameters ist optional.

Das dreidimensionale virtuelle Werkzeugmodells und/oder der wenigstens eine ermittelte Modellparameter wird mit gespeicherten Werkzeugdatensätzen verglichen. Jedem Werkzeugdatensatz ist jeweils ein Bearbeitungsprogramm zu materialabtragenden Bearbeitung zugeordnet.

Durch den Vergleich wird der Werkzeugdatensatz aus den vorhandenen Werkzeugdatensätzen ausgewählt, der dem dreidimensionalen virtuellen Werkzeugmodell entspricht. Kann keine Übereinstimmung zwischen einem Werkzeugdatensatz und dem dreidimensionalen virtuellen Werkzeugmodell festgestellt werden, wird ein entsprechender Werkzeugdatensatz erzeugt und anschließend ausgewählt.

Der Werkzeugdatensatz weist vorzugsweise eine Referenzkontur und/oder wenigstens einen Werkzeugparameter auf. Die Kontur des dreidimensionalen virtuellen Werkzeugmodells bzw. der daraus ermittelte Modellparameter wird mit der Referenzkontur des Werkzeugdatensatzes und/oder mit dem Werkzeugparameter des Werkzeugdatensatzes verglichen. Stimmt das dreidimensionale virtuelle Werkzeugmodell mit der Referenzkontur innerhalb vorgegebener Toleranzen überein und/oder stimmen die ermittelten Modellparameter und die gespeicherten Werkzeugparameter miteinander überein, so wird eine Übereinstimmung des dreidimensionalen virtuellen Werkzeugmodells mit dem Werkzeugdatensatz festgestellt.

Mit Hilfe der Referenzkontur des ausgewählten Werkzeugdatensatzes wird eine Werkzeugsollkontur erzeugt. Dies geschieht dadurch, dass die Referenzkontur in das dreidimensionale virtuelle Werkzeugmodell eingepasst wird. Das Einpassen erfolgt derart, dass die Referenzkontur an keiner zu bearbeitenden Stelle des Werkzeuges aus der durch das dreidimensionale virtuelle Werkzeugmodell beschriebenen Kontur herausragt. Die Einpassung der Referenzkontur erfolgt dabei unter der Randbedingung, dass der Materialabtrag möglichst gering ist. Dies wird dadurch erreicht, dass die Referenzkontur an den zu bearbeitenden Stellen des Werkzeuges mit möglichst geringem Abstand an dem erfassten dreidimensionalen Werkzeugmodell angeordnet wird. Hierzu können die Referenzkontur und das dreidimensionale virtuelle Werkzeugmodell relativ zueinander verschoben und/oder gedreht werden, wobei das Verschieben bzw. Drehen um eine oder mehrere der Achsen eines beispielsweise kartesischen Koordinatensystems erfolgt.

Die auf diese Weise erzeugte Werkzeugsollkontur wird anschließend für das materialabtragende Bearbeiten des Werkzeuges verwendet. Eine materialabtragende Bearbeitungseinheit kann hierzu derart angesteuert werden, dass an dem Werkzeug eine Werkzeugistkontur erzeugt wird, die der vorgegebenen Werkzeugsollkontur entspricht.

Mit Hilfe dieses Verfahrens ist es beispielsweise möglich, beschädigte bzw. einem Verschleiß unterworfene Werkezeuge nachzubearbeiten und dabei den Materialabtrag möglichst gering zu halten. Dadurch lässt sich erreichen, dass teure Werkzeuge häufigen nachbearbeitet werden können als bisher. Bislang wurde der Materialabtrag beim Nachbearbeiten eines Werkzeuges durch eine in der Nachbearbeitung erfahrene Bedienperson eher etwas großzügiger gewählt, um sicherzustellen, dass tatsächlich keine beschädigten oder verschlissenen Bereiche des Werkzeuges verbleiben.

Mit Hilfe des Verfahrens kann auch ein Werkzeugrohling, der durch ein additives Fertigungsverfahren, beispielsweise 3D-Drucken bzw. selektives Laserschmelzen hergestellt wurde, bearbeitet werden, um eine vorgegebene Geometrie einzuhalten. Die additiven Fertigungsverfahren sind häufig nicht ausreichend genau. An einigen Stellen des Werkzeugrohlings ist die Toleranz und die Oberflächenrauheit möglicherweise ausreichend. Beispielsweise kann aber im Bereich von Schneidkanten, Freiflächen oder Spanräumen eine Nachbearbeitung erfolgen, um die vorgegebenen Kenngrößen bzw. Werkzeugparameter einzuhalten.

Weiterhin kann dieses Verfahren auch zum Bearbeiten eines mit einer Beschichtung versehenen Hartmetallwerkzeuges verwendet werden. Heute wird beim Beschichten eines Hartmetallwerkzeuges bzw. eines Vollhartmetallwerkzeuges lediglich ein sehr dünner Schichtauftrag für die Beschichtung gewählt, um eine zu starke Verrundung der Schneidkanten zu vermeiden. Mit Hilfe des Verfahrens kann eine beliebig dicke Beschichtung, die für den optimalen Einsatz des Werkzeuges erforderlich oder vorteilhaft ist, auf den Hartmetallkern aufgetragen werden. Anschließend kann durch das materialabtragende Bearbeitungsverfahren eine Werkzeugistkontur hergestellt werden, die der ermittelten Werkzeugsollkontur entspricht.

Es ist ferner auch möglich, das Verfahren zur Bearbeitung eines hergestellten Werkzeugs zu verwenden, das einen Träger und wenigstens eine daran angeordnete Schneidplatte aufweist. Die wenigstens eine Schneidplatte wird häufig stoffschlüssig an dem Träger angeordnet und kann ungenau positioniert sein. Mittels des vorstehend beschriebenen Verfahrens kann bei der Werkzeugherstellung nach dem Befestigen der wenigstens eine Schneidplatte eine Messung und materialabtragende Bearbeitung der Schneidplatte erfolgen, um deren Kenngrößen (z.B. Position und/oder Ausrichtung der Schneidkante gegenüber einem Bezugspunkt an dem Träger) erforderlichenfalls zu korrigieren.

Zum materialabtragenden Bearbeiten des Werkzeuges kann eine Bearbeitungseinheit verwendet werden, die beispielsweise einen Laser und/oder ein Schleifwerkzeug und/oder ein Erodierwerkzeug aufweist. Im Prinzip kann jedes materialabtragende Werkzeug verwendet werden, das mit einer sehr hohen Genauigkeit gezielt Material vom Werkzeug entfernen kann.

Vorzugsweise wird die Referenzkontur bei dem Erzeugen der Werkzeugsollkontur zumindest an einem Abschnitt verschoben und/oder gedreht und/oder skaliert. Dadurch kann die Position der Referenzkontur relativ zu dem dreidimensionalen virtuellen Werkzeugmodell unter der Randbedingung eines möglichst geringen Werkzeugabtrages angeordnet werden. Es kann dabei ausreichend sein, nur die Abschnitte der Referenzkontur bei der Erzeugung der Werkzeugsollkontur zu verarbeiten, die anschließend durch das zugeordnete Bearbeitungsprogramm materialabtragend bearbeitet werden, z.B. die Bereiche der Schneidkanten und/oder der Freiflächen und/oder der Spanräume.

Es ist vorteilhaft, wenn bei dem Erzeugen der Werkzeugsollkontur das Einhalten wenigstens einer vorgegebenen Kenngröße für das Werkzeug als wenigstens eine weitere Randbedingung vorgegeben ist. Beispielsweise kann eine Randbedingung den Schneidwinkel und den zulässigen Toleranzbereich hierfür vorgeben. Analog hierzu können solche Vorgaben auch für alle anderen Kenngrößen bzw. geometrischen Masse des Werkzeuges gemacht werden.

Es ist vorteilhaft, wenn während des Vergleiches vor bzw. zum Auswählen eines mit dem dreidimensionalen virtuellen Werkzeugmodell übereinstimmenden Werkzeugdatensatzes zunächst der wenigstens eine ermittelte Modellparameter mit dem wenigstens einen im Werkzeugdatensatz enthaltenen Werkzeugparameter verglichen wird. Dies benötigt weniger Rechenkapazität und es können zumindest sehr schnell diejenigen Werkzeugdatensätze ausgeschlossen werden, bei denen der wenigstens eine Modellparameter nicht mit dem wenigstens einen Werkzeugparameter übereinstimmt. Stimmen der wenigstens eine Modellparameter und der wenigstens eine Werkzeugparameter miteinander überein, wird ein Vergleich des dreidimensionalen virtuellen Werkzeugmodells mit der Referenzkontur durchgeführt, um festzustellen, ob eine Übereinstimmung vorliegt.

In Abwandlung hierzu ist es prinzipiell ausreichend, lediglich die durch das dreidimensionale virtuelle Werkzeugmodell beschriebene Kontur des Werkzeuges mit der jeweiligen Referenzkontur der Werkzeugdatensätze zu vergleichen. Dies erfordert jedoch höhere Rechenkapazitäten und benötigt mehr Zeit.

Das Ermitteln wenigstens eines Modellparameters anhand des dreidimensionalen virtuellen Werkzeugmodells kann vorteilhafter Weise mit folgenden Schritten erfolgen:
- Erzeugen und/oder Auswählen eines Messprogrammes, wobei das Messprogramm wenigstens eine Schnittebene durch das virtuelle Werkzeugmodell und eine Messaufgabe vorgibt, mittels der der wenigstens eine zu bestimmende Modellparameter anhand der wenigstens einen Schnittkontur zwischen der wenigstens einen Schnittebene und dem virtuellen Werkzeugmodell bestimmt werden kann;
- Starten des Messprogrammes und Ermitteln des wenigstens einen Modellparameters anhand der wenigstens einen Schnittkontur des wenigstens einen Werkzeugmodells in der wenigstens einen Schnittebene.

Abhängig von der Lage der Schnittebene relativ zu dem virtuellen Werkzeugmodell ergibt sich eine Schnittkontur, beispielsweise ein Längsschnitt, ein Querschnitt oder ein beliebig schräg oder geneigt durch das Werkzeugmodell verlaufender Schnitt. In dieser Schnittebene ist eine Schnittkontur des virtuellen Werkzeugmodells vorhanden, deren Verlauf durch das Messprogramm ausgewertet wird, um den wenigstens einen Modellparameter zu ermitteln. Dabei können in jeder Schnittebene ein oder mehrere Modellparameter ermittelt werden. Auch ist es möglich, einen Modellparameter unter Verwendung mehrerer Schnittebenen bzw. Schnittkonturen zu bestimmen.

Als Modellparameter können beispielsweise ein Spanwinkel, ein Freiwinkel, ein Keilwinkel, eine Schneidenanzahl, ein Teilungswinkel, eine Länge des Werkzeuges, ein Kerndurchmesser, ein Drallwinkel, ein Eckenradius an einer Schneidkante oder eine beliebige Kombination der vorstehend erwähnten Modellparameter ermittelt werden.

Es ist vorteilhaft, wenn für das Erstellen des virtuellen Werkzeugmodells das Werkzeug zunächst aus mehreren Richtungen erfasst und vorzugsweise berührungslos erfasst wird. Die dabei erhaltenen Messdaten erzeugen eine Punktwolke, die dann wiederum unmittelbar als virtuelles Werkzeugmodell dienen kann oder, wie eingangs geschildert, durch Algorithmen und mathematische Verfahren zu einem virtuellen Werkzeugmodell weiterverarbeitet werden kann.

Das Verfahren kann auch bei einem Werkzeug verwendet werden, das mehrere Schneidplatten aufweist, die an einem gemeinsamen Träger angeordnet sind. Bei der Herstellung eines solchen Werkzeuges ist die Position durch das Anbringen der Schneidplatten, beispielsweise das stoffschlüssige Anbringen der Schneidplatten am Träger, in der Regel nicht genau genug herstellbar. Durch das Verfahren kann ein Materialabtrag an den Schneidplatten erfolgen, um die Position von Schneidkanten oder die Ausrichtung von Kanten oder Flächen relativ zu einer Bezugsachse des Trägers zu erreichen.

Vorteilhafte Ausgestaltungen der Erfindung ergeben sich aus den abhängigen Patentansprüchen, der Beschreibung und der Zeichnungen. Nachfolgend werden bevorzugte Ausführungsbeispiele der Erfindung anhand der beigefügten Zeichnungen im Einzelnen erläutert. Es zeigen:
Fig. 1 ein Blockschaltbild eines Ausführungsbeispiels einer Vorrichtung zur materialabhebenden Bearbeitung eines Werkzeuges,
Fig. 2 ein Flussdiagramm eines Ausführungsbeispiels eines Verfahrens zur materialabhebenden Bearbeitung eines Werkzeuges,
Fig. 3 ein beispielhaftes, nicht verschleißbehaftetes Werkzeug in einer perspektivischen Darstellung,
Fig. 4 das Werkzeug aus Fig. 3 in einem gebrauchten, verschleißbehafteten Zustand,
Fig. 5 eine schematische Veranschaulichung einer Referenzkontur eines Werkzeugdatensatzes,
Fig. 6-8 jeweils eine schematische Darstellung der Referenzkontur aus Fig. 5 sowie eines auf Messdaten erfassten dreidimensionalen virtuellen Werkzeugmodells des Werkzeuges aus Fig. 4,
Fig. 9 ein durch ein additives Herstellungsverfahren schichtweise hergestelltes Werkzeug in schematischer Seitenansicht,
Fig. 10 ein mit einer Beschichtung versehenes Vollmetallhartwerkzeug in einer schematischen Seitenansicht,
Fig. 11 eine Detaildarstellung des Bereichs XI in Figur 10,
Fig. 12 ein beispielhaftes Werkzeug, das einen Träger sowie an dem Träger angeordnete Schneidplatten aufweist und
Fig. 13 eine Prinzipskizze einer nicht der vorgegebenen Lage entsprechenden Schneidplatte beim Werkzeug aus Fig. 12 sowie eine Prinzipskizze der bei bisherigen Verfahren notwendigen Antastpunkte an einer Schneidplatte.

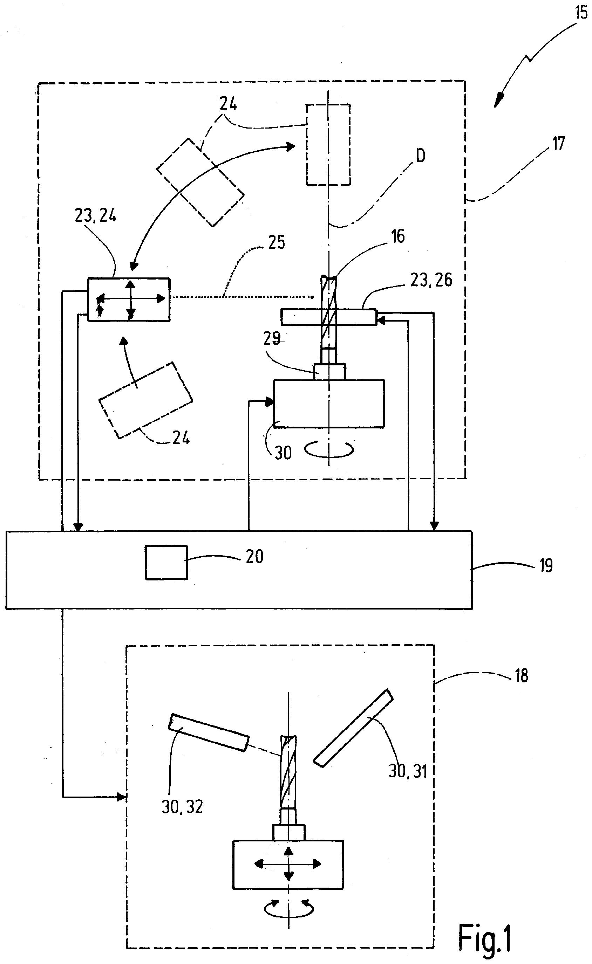

In Fig. 1 ist der prinzipielle Aufbau einer Vorrichtung 15 zum materialabtragenden Bearbeiten eines Werkzeuges 16 im Blockschaltbild veranschaulicht. Das Werkzeug 16 kann ein Fräswerkzeug, ein Bohrwerkzeug oder irgendein anderes beliebiges Werkzeug sein. Bei dem Ausführungsbeispiel handelt es sich um ein Werkzeug 16, das bei seinem Betrieb rotierend um die Längsachse angetrieben wird. Das Werkzeug 16 wird durch Kenngrößen beschrieben, die die das Werkzeug 16 charakterisierenden Parameter darstellen. Beispielsweise können die Anzahl der Schneiden, der Spanwinkel, der Freiwinkel, der Teilungswinkel zwischen in Umfangsrichtung um die Längsachse des Werkzeuges 16 benachbarten Schneiden, die Länge des Werkzeuges in Richtung seiner Längsachse, der Kerndurchmesser, der Drallwinkel, die Drallsteigung oder das Verhältnis zwischen Kerndurchmesser und Flugkreisbahn der Werkzeugschneiden jeweils einzeln oder in beliebiger Kombination verwendet werden. Welche Kenngrößen geeignet sind, das Werkzeug 16 zu beschreiben, hängt auch von der Art des Werkzeuges ab.

Die Vorrichtung 15 weist eine Messeinheit 17, eine Bearbeitungseinheit 18, sowie eine die Messeinheit 17 und die Bearbeitungseinheit 18 steuernde Steuereinheit 19 auf. In Abwandlung zu dem hier veranschaulichten Ausführungsbeispiel ist es auch möglich, die Messeinheit 17 und die Bearbeitungseinheit 18 durch separate Steuereinheiten zu steuern und räumlich zu trennen. Der erforderliche Datenaustausch kann zwischen den Steuereinheiten durch bekannte Kommunikationsmittel drahtlos oder drahtgebunden erfolgen.

Zu der Messeinheit 17 gehört wenigstens eine Messeinrichtung 23. Die wenigstens eine Messeinrichtung 23 der Messeinheit 17 ist so ausgeführt, dass mit Hilfe der Messeinheit 17 die dreidimensionale äußere Kontur des Werkzeuges 16 an der Stirnfläche und allen Umfangsflächen erfasst werden kann.

Beispielsgemäß weist die Messeinheit 17 eine Messeinrichtung 23 in Form eines 3D-Scanners 24 auf. Als 3D-Scanner 24 kann beispielsweise ein Laserscanner verwendet werden, der einen Laserstrahl 25 auf das Werkzeug 16 richtet, um dessen Kontur zu erfassen.

Die Messeinheit 17 weist bei dem hier beschriebenen Ausführungsbeispiel außerdem eine weitere Messeinrichtung 23 in Form einer Kamera 26 auf. Die Kamera 26 kann als Zeilenkamera oder Matrixkamera mit mehreren Zeilen realisiert sein. Die Kamera 26 kann beispielsweise zur Erzeugung von Durchlichtaufnahmen eingerichtet sein. Dann ist auf der der Kamera 26 gegenüberliegenden Seite des Werkzeuges 16 eine Beleuchtungseinheit angeordnet, die der Übersicht halber nicht veranschaulicht ist.

Das Werkzeug 16 ist beispielsgemäß in einer Werkzeughalterung 29 angeordnet. Die Werkzeughalterung 29 kann zur Erfassung des Werkzeuges 16 relativ zu der wenigstens einen Messeinrichtung 23 bewegbar sein. Im Ausführungsbeispiel ist die Werkzeughalterung 29 um eine Drehachse D drehbar angeordnet. Der Werkzeughalterung 29 ist ein Drehantrieb 30 zugeordnet.

Die wenigstens eine Messeinrichtung 23 kann alternativ oder zusätzlich zu der Werkzeughalterung 29 positionierbar sein. Bei dem hier beschriebenen Ausführungsbeispiel ist der 3D-Scanner 24 relativ zur Werkzeughalterung 29 positionierbar, um das Werkzeug 16 radial zur Drehachse D und/oder schräg zur Drehachse D und/oder parallel bzw. fluchtend gegenüber der Drehachse D erfassen zu können. Die Positionierbarkeit des 3D-Scanners ist in Fig. 1 durch beispielhafte gestrichelte Positionen des 3D-Scanners 24 veranschaulicht.

Zu der Vorrichtung 15 gehört außerdem die Bearbeitungseinheit 18, mittels der das Werkzeug 16 materialabhebend bearbeitet werden kann. Die Bearbeitungseinheit 18 weist hierzu ein Bearbeitungswerkzeug 30 auf. Das Bearbeitungswerkzeug 30 kann beispielsweise eine Schleifscheibe 31 sein. Das Werkzeug 16 kann auch mit Hilfe eines Lasers 32 oder eines Erodierwerkzeuges bearbeitet werden. Bei der Bearbeitungseinheit 18 kann es sich somit um eine Schleifmaschine, eine Laserbearbeitungsmaschine, eine Erodiermaschine oder eine kombinierte Bearbeitungsmaschine handeln.

Die Messeinheit 17 und beispielsgemäß der 3D-Scanner 24 liefert Messdaten in Form einer Punktwolke PW. Diese werden an die Steuereinheit 19 oder alternativ eine Verarbeitungseinrichtung der Messeinheit 17 oder eine externe Recheneinheit übermittelt. Die Messeinheit 17 kann in diesem Fall eine entsprechende Schnittstelle zur Datenübertragung aufweisen. Die Steuereinheit 19 enthält außerdem eine Speichereinheit 20 und/oder ist mit einer externen Speichereinheit 20 verbunden.

Die Vorrichtung 15 kann außerdem eine nicht veranschaulichte Bedienschnittstelle mit einer Anzeige bzw. Bedienoberfläche aufweisen. Die Bedienschnittstelle kann bekannte Bedienmöglichkeiten, wie einen berührungsempfindlichen Bildschirm, eine Computermaus, eine Tastatur, ein Touchpad, eine Steuerung über Neigungs- und/oder Beschleunigungssensoren oder dergleichen aufweisen. Es ist auch möglich, die Steuereinheit 19 über eine Schnittstelle mit einer oder mehreren externen Rechen- und/oder Speichereinheiten zu verbinden, um die Rechen- bzw. Speicherkapazität erforderlichenfalls zu erhöhen oder Daten zu importieren bzw. zu exportieren.

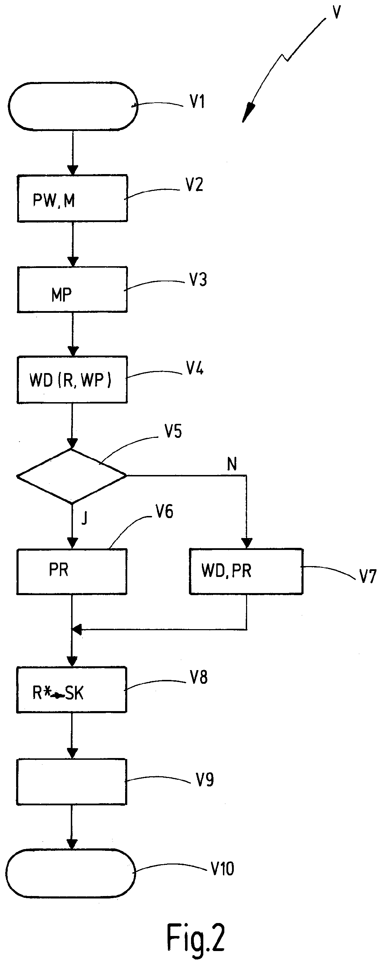

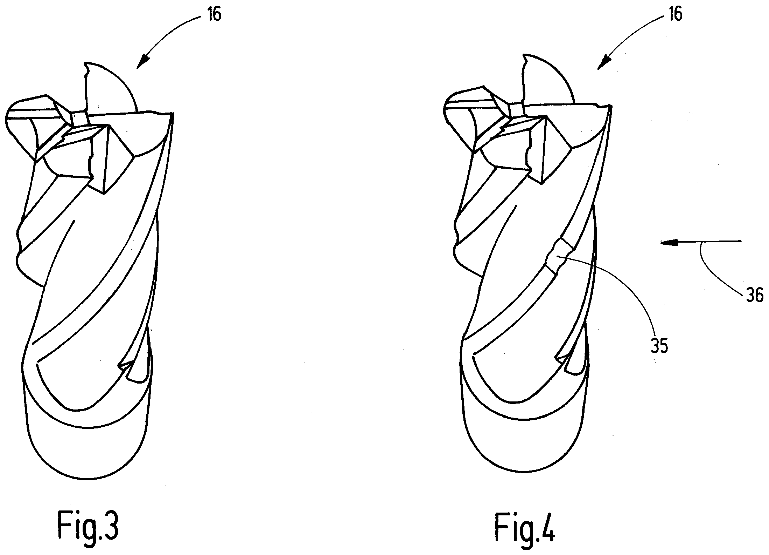

In Fig. 2 ist ein Flussdiagramm eines beispielhaften Verfahrens dargestellt. Der Verfahrensablauf wird unter Bezugnahme auf die Fig. 4-8 nachfolgend beispielhaft für die Nachbearbeitung eines gebrauchten, verschleißbehafteten Werkzeuges 16 erläutert. In Fig. 3 ist das Werkzeug 16 in dem ursprünglichen, ungebrauchten Zustand veranschaulicht. Lediglich schematisch und nicht maßstabsgetreu ist in Fig. 4 das gebrauchte, beschädigte Werkzeug 16 dargestellt, bei dem beispielhaft schematisch ein Ausbruch 35 veranschaulicht ist. Das gebrauchte, beschädigte Werkzeug 16 aus Fig. 4 soll mit Hilfe der Vorrichtung 15 bzw. des Verfahrens V nachbearbeitet werden, um Beschädigungen, wie den Ausbruch 35 zu eliminieren und die Bearbeitungsergebnisse mit Hilfe des Werkzeuges 16 bei dessen Einsatz zu verbessern.

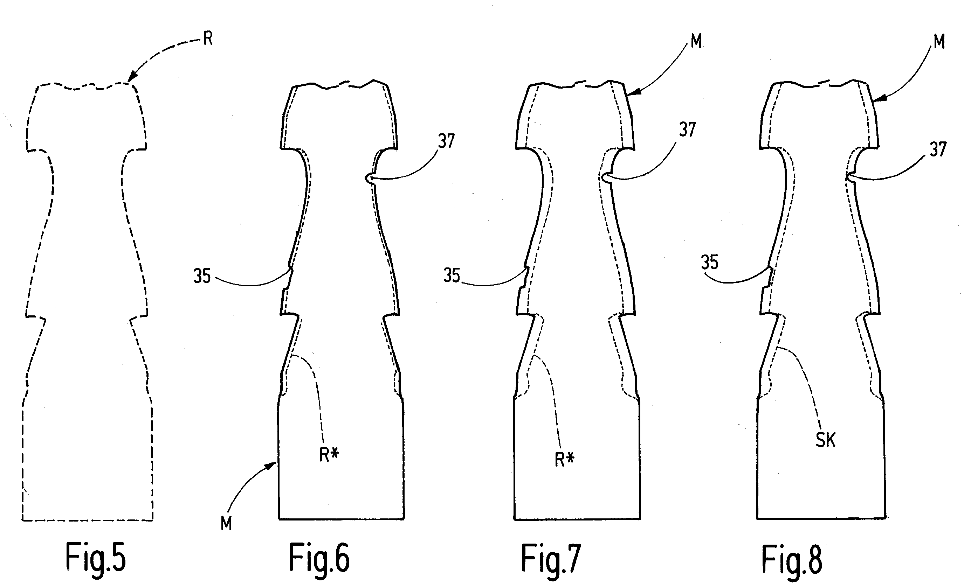

Das Verfahren V wird in einem ersten Verfahrensschritt V1 gestartet, nachdem das Werkzeug 16 in die Werkzeughalterung 29 eingesetzt wurde, so dass es mit Hilfe der Messeinheit 17 dreidimensional vermessen werden kann. In einem darauffolgenden zweiten Verfahrensschritt V2 wird aus den Messdaten der Messeinheit 17 ein dreidimensionales virtuelles Werkzeugmodell M erzeugt. Das dreidimensionale virtuelle Werkzeugmodell M ist in Fig. 6-8 stark schematisiert als zweidimensionale Kontur illustriert, wenn das virtuelle Werkzeugmodell M aus einer Richtung gemäß Pfeil 36 in Fig. 4 betrachtet wird. Das beschädigte Werkzeug 16 weist neben dem Ausbruch 35 z.B. eine Kerbe 37 auf, die durch das erzeugte dreidimensionale virtuelle Werkzeugmodell M abgebildet wird (Fig. 6-8).

Das dreidimensionale virtuelle Werkzeugmodell M wird basierend auf einer Punktwolke PW ermittelt. Die Punktwolke PW wird beim Ausführungsbeispiel durch die Scandaten des 3D-Scanners 24 erzeugt. Die Punktwolke PW kann unmittelbar oder nach einer Verarbeitung das dreidimensionale Werkzeugmodell M bilden. Beispielsweise ist es möglich, durch Algorithmen fehlerhafte Erfassungspunkte aus der Punktwolke PW zu eliminieren. Alternativ oder zusätzlich kann ein Gittermodell oder ein texturiertes Modell erzeugt und als virtuelles Werkzeugmodell M verwendet werden. Hierbei können bekannte Algorithmen und mathematische Methoden eingesetzt werden.

Mit Hilfe des virtuellen Werkzeugmodells M werden beim Ausführungsbeispiel in einem dritten Verfahrensschritt V3 ein oder mehrere Modellparameter MP des virtuellen Werkzeugmodells M ermittelt. Als Modellparameter MP werden insbesondere solche Masse oder Größen ermittelt, die bei einem Werkzeug 16 als Kenngrößen dienen, wie etwa die Anzahl der Schneidkanten, ein Teilungswinkel, ein Spanwinkel, ein Freiwinkel, usw. Welche Modellparameter MP ermittelt werden und die Anzahl der ermittelten Modellparameter MP im dritten Verfahrensschritt V3 hängt von der Art des Werkzeuges 16 ab.

Der dritte Verfahrensschritt V3 ist optional. Das Verfahren V kann auch ohne die Ermittlung eines Modellparameters MP ausgeführt werden. Die Ermittlung wenigstens eines Modellparameters MP im dritten Verfahrensschritt V3 ist allerdings vorteilhaft, weil dadurch im nachfolgenden Verfahrensablauf weniger Rechenzeit bzw. weniger Rechenkapazität erforderlich ist.

Um den wenigstens einen Werkzeugparameter MP im dritten Verfahrensschritt zu ermitteln, wird vorzugsweise ein Messprogramm ausgewählt, das eine oder mehrere Schnittebenen durch das virtuelle Werkzeugmodell M legt. In den Schnittebenen entsteht jeweils eine Schnittkontur zwischen der Schnittebene und dem virtuellen Werkzeugmodell M. Durch bekannte Bildverarbeitungsmethoden kann mittels einer oder auch mehrerer Schnittkonturen jeweils ein oder mehrere Modellparameter MP ermittelt werden.

In einem vierten Verfahrensschritt V4 wird das virtuelle Werkzeugmodell M sowie der wenigstens eine Modellparameter MP mit in einer Speichereinheit 20 der Steuereinheit 19 oder einer mit der Steuereinheit 19 kommunikationsverbundenen Recheneinheit abgespeicherten Werkzeugdatensätzen WD verglichen. Jeder Werkzeugdatensatz WD weist beispielsgemäß eine Referenzkontur R sowie wenigstens einen Werkzeugparameter WP auf. Als Werkzeugparameter WP werden eine oder mehrere Kenngrößen verwendet, die das Werkzeug 16 beschreiben. Die Referenzkontur R gibt eine maßstabsgetreue, ideale Kontur für die Kanten und Flächen des Werkzeuges 16 an.

In dem vierten Verfahrensschritt V4 wird nun anhand des virtuellen Werkzeugmodells M sowie des wenigstens einen Modellparameters MP ein Vergleich mit den vorhandenen Werkzeugdatensätzen WD durchgeführt. Dabei wird vorzugsweise so vorgegangen, dass zunächst der wenigstens eine Modellparameter MP mit den Werkzeugparametern WP der Werkzeugdatensätze WD verglichen und auf Übereinstimmung überprüft wird. Gibt beispielsweise einer der Modellparameter MP an, dass es sich bei dem erfassten Werkzeug 16 um ein Werkzeug mit vier spiralförmigen Schneidkanten handelt, können bei dem Vergleich mit den Datensätzen WD sehr schnell die Datensätze gefunden werden, die ein Werkzeug mit vier spiralförmigen Schneidkanten betreffen. Alle anderen Werkzeugdatensätze WD können für die weitere Übereinstimmungsüberprüfung unberücksichtigt bleiben. Dieser Vergleich kann sehr schnell und zeitsparend ausgeführt werden. Je genauer das Werkzeug durch die ermittelten Modellparameter MP und die in den Werkzeugdatensätzen WD enthaltenen Werkzeugparameter WP beschrieben ist, je schneller können die für das weitere Verfahren relevanten Werkzeugdatensätze WD ermittelt werden.

Stimmen bei einem Werkzeugdatensatz WD sämtliche Werkzeugparameter WP mit den ermittelten Modellparametern MP überein, so wird bei dem hier beschriebenen Ausführungsbeispiel die Referenzkontur R des Werkzeugdatensatzes WD mit dem virtuellen Werkzeugmodell M verglichen und auf Übereinstimmung geprüft. Erst wenn auch die Referenzkontur R und das virtuelle Werkzeugmodell M übereinstimmen, wurde ein übereinstimmender Werkzeugdatensatz WD gefunden.

In einem fünften Verfahrensschritt V5 wird abgefragt, ob ein mit dem virtuellen Werkzeugmodell M und dem wenigstens einen Modellparameter MP übereinstimmender Werkzeugdatensatz WD gefunden wurde. Trifft dies zu, wird das Verfahren V im sechstens Verfahrensschritt V6 fortgesetzt (Verzweigung J aus dem fünften Verfahrensschritt V5). Ist dies nicht der Fall, wird das Verfahren V in einem siebten Verfahrensschritt V7 fortgesetzt (Verzweigung N aus dem fünften Verfahrensschritt V5).

In dem sechsten Verfahrensschritt V6 wird ein Bearbeitungsprogramm PR ausgewählt. Vorzugsweise ist jedem Werkzeugdatensatz WD genau ein Bearbeitungsprogramm PR zugeordnet. Daher erfolgt durch das Auffinden eines Werkzeugdatensatzes WD bereits automatisch die Auswahl des Bearbeitungsprogrammes PR, das zur Steuerung der Bearbeitungseinheit 18 beim Nachbearbeiten des Werkzeuges 16 dient.

Konnte kein Verwendbarer Datensatz WD gefunden werden, wird in dem siebten Verfahrensschritt V7 ein entsprechender Datensatz WD7 erstellt und ein Bearbeitungsprogramm zugeordnet oder ebenfalls neu erstellt.

Nach dem sechsten Verfahrensschritt V6 oder dem siebten Verfahrensschritt V7 wird das Verfahren V im achten Verfahrensschritt V8 fortgesetzt.

In dem achten Verfahrensschritt V8 werden eine oder mehrere Bearbeitungsparameter des Bearbeitungsprogrammes PR ermittelt bzw. festgelegt. Die Vorgehensweise im achten Verfahrensschritt V8 ist schematisch in den Fig. 6-8 illustriert. Die Referenzkontur R wird in das erfasste virtuelle Werkzeugmodell M eingepasst. An dieser Stelle sei noch einmal darauf hingewiesen, dass trotz der lediglich zweidimensionalen Darstellung in den Fig. 5-8 sowohl die Referenzkontur R als auch das virtuelle Werkzeugmodell M dreidimensional sind. Zur Erläuterung wurde eine zweidimensionale Darstellung gewählt, um die Übersichtlichkeit zu verbessern. Die Referenzkontur R wird in das virtuelle Werkzeugmodell M unter Berücksichtigung von einer oder mehreren Randbedingungen eingepasst. Dabei wird die Referenzkontur R oder ein Teil dieser Referenzkontur R relativ zum virtuellen Werkzeugmodell M um eine oder mehrere Achsen eines beispielsweise kartesischen Koordinatensystems gedreht und/oder bewegt. Die Referenzkontur R kann auch insgesamt oder teilweise skaliert werden. Die Einpassung der Referenzkontur R in das virtuelle Werkzeugmodell M erfolgt derart, dass die Referenzkontur R durch Drehung und/oder Verschiebung und/oder Skalierung modifiziert wird, so dass sich eine modifizierte Referenzkontur R* ergibt. Diese modifizierte Referenzkontur R* wird innerhalb des virtuellen Werkzeugmodells M positioniert, so dass die Längsachsen der modifizierten Referenzkontur R* und des virtuellen Werkzeugmodells M übereinstimmen. An den zu bearbeitenden Bereichen des Werkzeuges 16 ragt die modifizierte Referenzkontur R* nicht aus dem virtuellen Werkzeugmodell M heraus. An den später bei der Bearbeitung zu bearbeitenden Abschnitten des Werkzeuges 16 können zwischen der modifizierten Referenzkontur R* und dem virtuellen Werkzeugmodell M Berührpunkte existieren, wobei vorzugsweise Schnittpunkte oder Schnittkanten ausgeschlossen werden.

Ferner wird zumindest eine Randbedingung vorgegeben, nämlich dass das Differenzvolumen zwischen dem virtuellen Werkzeugmodell M und der modifizierten Referenzkontur R* minimal sein soll. Dies ist deswegen von Bedeutung, weil dadurch das abzutragende Material minimiert werden kann. Wenn bei der Nachbearbeitung nur so viel Material vom Werkzeug 16 abgenommen wird, wie unbedingt notwendig ist, kann die Anzahl der möglichen Nachbearbeitungen des Werkzeuges 16 und mithin die Gesamtlebensdauer vergrößert werden.

Neben der Randbedingung, dass der Materialabtrag minimal sein soll, können auch weitere Randbedingungen vorgegeben werden. Beispielsweise kann definiert werden, an welchen Bereichen der Referenzkontur ein Materialabtrag möglich bzw. erforderlich ist. Außerdem können einzuhaltende Masse für bestimmte Kenngrößen vorgegeben werden, beispielsweise für Freiwinkel, Spanwinkel, Verhältnisse des Kerndurchmessers gegenüber der Flugkreisbahn der Schneidkanten, usw.

Wurde schließlich unter Berücksichtigung der wenigstens einen Randbedingung eine modifizierte Referenzkontur R* gefunden, die alle Randbedingungen erfüllt und zumindest in den geforderten Abschnitten innerhalb des virtuellen Werkzeugmodells M angeordnet ist, stellt diese modifizierte Referenzkontur R* eine Werkzeugsollkontur SK dar.

Schematisch ist dieser Ablauf in den Fig. 6-8 illustriert. In Fig. 6 ist zu erkennen, dass die modifizierte Referenzkontur R* nicht die Bedingung erfüllt, dass sie innerhalb des virtuellen Werkzeugmodells M liegt. Dort, wo der Ausbruch 35 und die Kerbe 37 am Werkzeug 16 vorhanden sind, schneidet die modifizierte Referenzkontur R* das virtuelle Werkzeugmodell M und ist daher nicht als Werkzeugsollkontur SK verwendbar.

In der schematischen Darstellung nach Fig. 7 ist zu erkennen, dass die modifizierte Referenzkontur R* zwar innerhalb des virtuellen Werkzeugmodells M liegt, jedoch einen zu großen Materialabtrag erzeugt, weil zwischen der modifizierten Referenzkontur R* und dem Ausbruch 35 bzw. der Kerbe 37 ein unnötig großer Abstand verbleibt, der zu einem unnötigen Materialabtrag führen würde.

Die optimierte modifizierte Referenzkontur R*, die die Werkzeugsollkontur SK bildet, ist schematisch in Fig. 8 veranschaulicht. Dort werden durch die Werkzeugsollkontur SK sämtliche Schädigungen 35, 37 bei der Nachbearbeitung eliminiert, während gleichzeitig der Materialabtrag unter Berücksichtigung der optional vorhandenen weiteren Randbedingungen minimiert ist.

Nachdem im achten Verfahrensschritt V8 die Werkzeugsollkontur SK ermittelt wurde, wird in einem neunten Verfahrensschritt V9 das Werkzeug 16 basierend auf der Werkzeugsollkontur SK und dem Bearbeitungsprogramm PR bearbeitet, so dass die Werkzeugistkontur des Werkzeuges 16 nach der Bearbeitung - im Rahmen der technisch möglichen Genauigkeit - der Werkzeugsollkontur SK entspricht.

Anschließend wird im zehnten Verfahrensschritt V10 das Verfahren V beendet.

Alternativ zu dem beispielhaften Verfahrensablauf in Fig. 2 ist es auch möglich, nach dem neunten Verfahrensschritt V9 erneut eine Messung mit der Messeinheit 17 vorzunehmen und das daraus ermittelte virtuelle Werkzeugmodell M mit der im achten Verfahrensschritt V8 erzeugten Sollkontur SK zu vergleichen, um Abweichungen zu ermitteln. Gegebenenfalls kann daraus eine veränderte Sollkontur errechnet und eine erneute Bearbeitung mit der Bearbeitungseinheit 18 vorgenommen werden. In der Regel wird ein solcher iterativer Prozessablauf aber nicht erforderlich sein.

Das Verfahren V wurde vorstehend beispielhaft für das Nachbearbeiten eines gebrauchten Werkzeuges 16 (Fig. 4) beschrieben. Das Verfahren V eignet sich aber auch im Rahmen der Herstellung eines neuen Werkzeuges.

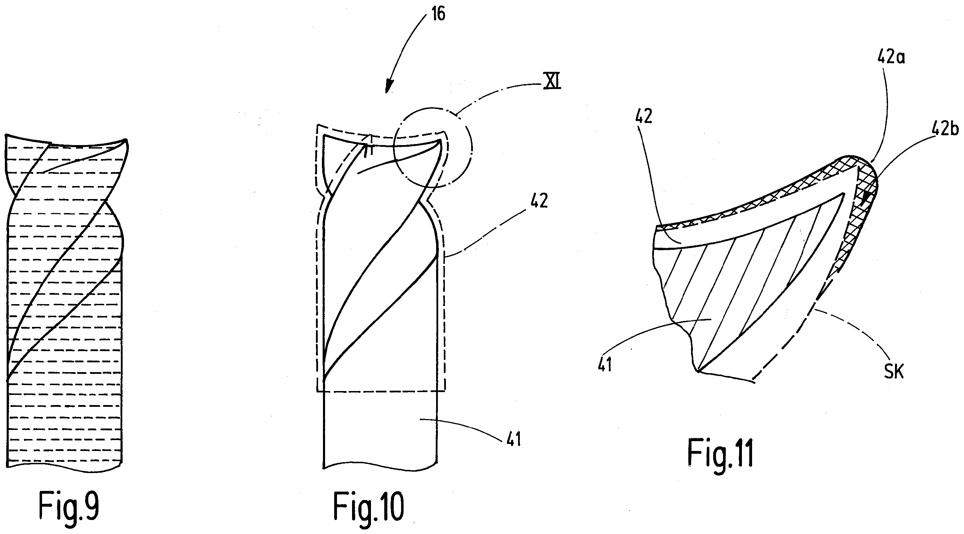

In Fig. 9 ist beispielhaft schematisch ein Werkzeug 16 veranschaulicht, das durch einen additiven Fertigungsprozess, beispielsweise 3D-Drucken bzw. selektives Laserschmelzen in aufeinanderfolgenden Schichten hergestellt wurde. Bei dieser Herstellungsmethode sind die erreichbaren Genauigkeiten häufig für die Anforderungen an ein Werkzeug 16 nicht ausreichend. Außerdem ist die Oberfläche des so hergestellten Werkzeuges 16 vergleichsweise rau. Ein derart hergestellter Werkzeugrohling 16 kann durch das Verfahren V gemessen und nachbearbeitet werden, so dass seine Kenngrößen und Oberflächenqualitäten den Anforderungen entsprechen.

Eine weitere Anwendungsmöglichkeit ist schematisch anhand von Fig. 10 und 11 dargestellt. Fig. 10 zeigt ein Werkzeug 16 mit einem Vollhartmetallkern 41 und einer Beschichtung 42, die zumindest auf Abschnitte des Vollhartmetallkerns 41 aufgetragen ist. Heutzutage werden solche Beschichtungen mit sehr geringen Schichtdicken von weniger als 3 µm. Dies ist darauf zurückzuführen, dass größere Schichtdicken zu einer zu starken Verrundung der Schneidkanten führen. Allerdings sind die geringen Schichtdicken im Hinblick auf den Einsatz und die Lebensdauer des Werkzeuges 16 unzulänglich. Es kann erfindungsgemäß vorgesehen sein, den Vollhartmetallkern 41 mit einer deutlich dickeren Beschichtung 42 zu versehen, z.B. mit einer bis zu 30 µm dicken Beschichtung 42. Zwar werden hierbei Kenngrößen des Werkzeuges 16 verändert und entsprechen nicht mehr den Vorgaben, jedoch wird anschließend das vorstehend beschriebene Verfahren V ausgeführt, so dass die geforderten Kenngrößen wieder erreicht werden. Beispielsweise können Kantenradien, Spanwinkel, Freiwinkel, durch die Beschichtung 42 verdeckte Strukturen, Spanraumabmessungen, usw. wieder freigelegt bzw. hergestellt werden. Somit lassen sich deutlich größere Schichtdicken von bis zu 30 µm erreichen. Dennoch kann das Werkzeug 16 mit den geforderten Kenngrößen schnell und effizient hergestellt werden. Wie in Fig. 11 schematisch veranschaulicht ist, wird beispielsweise eine starke Verrundung 42a durch den Auftrag der Beschichtung 42 auf den Vollhartmetallkern 41 korrigiert, in dem ein Materialvolumen 42b der Beschichtung 42 abgetragen wird, so dass die Kontur des Werkzeugs an der Schneidkante der Sollkontur SK entspricht.

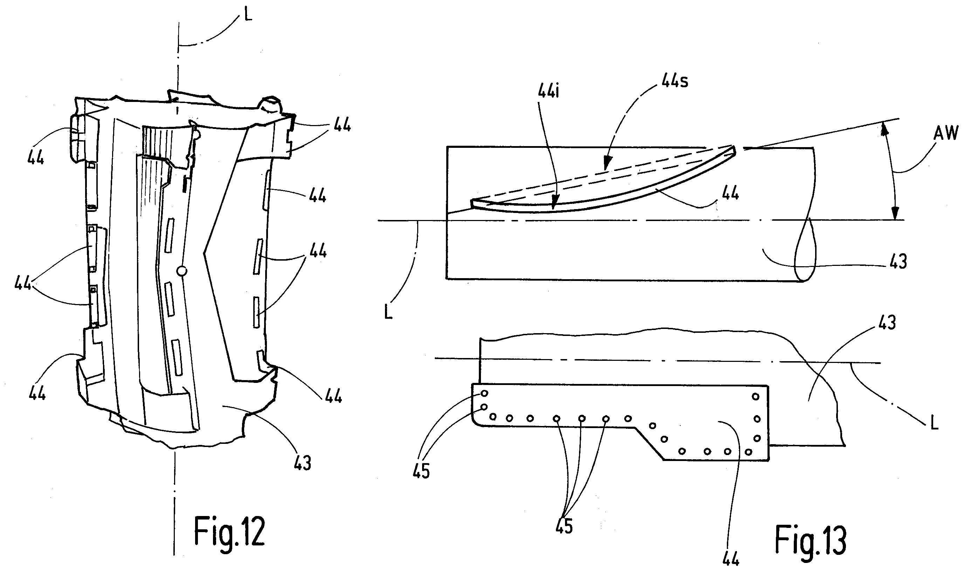

Ein weiteres Ausführungsbeispiel bei der Neuherstellung eines Werkzeuges 16 zeigen Fig. 12 und 13. Dort ist ein Werkzeug 16 mit einem Träger 43 wenigstens einer an dem Träger 43 angeordneten Schneidplatte 44 veranschaulicht. Die Schneidplatten 44 werden häufig stoffschlüssig, beispielsweise durch Löten, an dem Träger 43 angebracht. Dabei wird die geforderte Position der Schneidplatten 44 in einigen Fällen nicht exakt erreicht. In Fig. 13 ist schematisch gestichelt die Sollposition 44s einer Schneidplatte 44 dargestellt. Beim stoffschlüssigen Befestigen, insbesondere durch Löten, verformt sich die Schneidplatte 44 und nimmt die Istposition 44i ein. Beim Löten können neben Positionsabweichungen in einer oder mehreren Raumrichtungen auch Konturabweichungen an der radial äußeren Kontur der Schneidplatte durch das Löten der Schneidplatte 44 an den Träger 43 auftreten. Die Schneidplatte kann sich biegen, wodurch auch die radial äußere Kante, die den Materialabtrag des Werkzeugs bestimmt, einen gekrümmten Verlauf erhält.

Bei vielschneidigen Werkzeugen, speziell mit langen Schneiden (wie beispielhaft in Fig. 12 dargestellt) wurde bislang eine Vielzahl an Tastpunkten 45 entlang der Schneide der Schneidplatte 44 benötigt, um den Plattenverwurf (Krümmung der Schneidplatte 44) durch den Lötprozess zu vermessen. Dies wurde in der Bearbeitungsmaschine ausgeführt und dauerte sehr lange - die Bearbeitungsmaschine ist in dieser Zeit unproduktiv. Durch die Erfindung kann die Bearbeitungszeit in der Bearbeitungseinrichtung 18 (Erodieren und/oder Schleifen und/oder Laserbearbeitung) massiv verkürzt werden, weil die Plattensitzmessungen und optional auch die Kompensationsrechnungen separat in der Messeinheit 17 ausgeführt werden können. Die Vermessung und Ermittlung der Sollkontur SK kann durch die Messeinheit 17 im Vorfeld ausgeführt und die Daten mit dem Werkzeug 16 an die Bearbeitungseinrichtung 18 übergeben werden. Mit einer Vorabmessung und optional auch bereits der Ermittlung der Bearbeitungsdaten zur Erstellung einer der Sollkontur SK entsprechenden Istkontur kann der Bearbeitungsprozess effizienter gestaltet werden. Das 3D-Scannen der Schneiden bzw. Schneidplatten 44 ist wesentlich effizienter als das Antasten einzelner Tastpunkte 45. Zudem kann idealerweise auch durch das 3D-Scannen das Aufmaß der Schneidplatten 44 gegenüber der Sollkontur SK genau ermitteln werden. Dies ist durch reines Antasten, gerade bei Konturverläufen, sehr aufwendig.

Durch das oben beschriebene Verfahren V kann der mit den Schneidplatten 44 bestückte Träger 43 vermessen und ein virtuelles Werkzeugmodell M erzeugt werden. Anschließend können die Schneidplatten 44 erforderlichenfalls nachbearbeitet werden, so dass die Kenngrößen des Werkzeuges 16 eingehalten werden.

Die Erfindung betrifft eine Vorrichtung 15 sowie ein Verfahren V zur materialabtragenden Bearbeitung eines Werkzeuges 16. Das Werkzeug 16 wird zunächst mittels einer Messeinheit 17 dreidimensional vermessen und daraus ein dreidimensionales virtuelles Werkzeugmodell M erzeugt. Dieses virtuelle Werkzeugmodell M wird mit einer Referenzkontur R eines jeweiligen Werkzeugdatensatzes WD verglichen. Wurde eine Übereinstimmung festgestellt, wird ein dem Werkzeugdatensatz WD zugeordnetes Bearbeitungsprogramm PR ausgewählt und eine Sollkontur SK durch Einpassen der Referenzkontur R in das dreidimensionale virtuelle Werkzeugmodell M ermittelt. Auf Basis dieser Sollkontur SK kann anschließend das Werkzeug 16 bearbeitet werden.

### Bezugszeichenliste:

- 15: Vorrichtung
- 16: Werkzeug
- 17: Messeinheit
- 18: Bearbeitungseinheit
- 19: Steuereinheit
- 20: Speichereinheit

- 23: Messeinrichtung
- 24: 3D-Scanner
- 25: Laserstrahl
- 26: Kamera

- 29: Werkzeughalterung
- 30: Bearbeitungswerkzeug
- 31: Schleifscheibe
- 32: Laser

- 35: Ausbruch
- 36: Pfeil
- 37: Kerbe

- 40: Schicht
- 41: Vollhartmetallkern
- 42: Beschichtung
- 42a: Verrundung
- 42b: Materialvolumen
- 43: Träger
- 44: Schneidplatte
- 44i: Istposition der Schneidplatte
- 44s: Sollposition der Schneidplatte
- 45: Tastpunkt

- AW: Achswinkellage
- D: Drehachse
- M: dreidimensionales virtuelles Werkzeugmodell
- MP: Modellparameter
- R: Referenzkontur
- SK: Werkzeugsollkontur

- V: Verfahren
- V1: erster Schritt
- V2: zweiter Schritt
- V3: dritter Schritt
- V4: vierter Schritt
- V5: fünfter Schritt
- V6: sechster Schritt
- V7: siebter Schritt
- V8: achter Schritt
- V9: neunter Schritt
- V10: zehnter Schritt

- WD: Werkzeugdatensatz
- WP: Werkzeugparameter

## Patentansprüche

1. Verfahren (V) zur materialabtragenden Bearbeitung eines Werkzeugs (16), mit folgenden Schritten:
- Ausführen einer dreidimensionalen Messung des Werkzeugs (16) und Erzeugen eines dreidimensionalen virtuellen Werkzeugmodells (M) des Werkzeugs (16) aus den Messdaten der dreidimensionale Messung,
- Bereitstellen mehrerer Werkzeugdatensätze (WD) mit jeweils einer Referenzkontur (R) des Werkzeugs (16) und/oder mit wenigstens einem einer Kenngröße des Werkzeugs (16) entsprechenden Werkzeugparameter (MP), wobei jedem Werkzeugdatensatz (WD) jeweils ein Bearbeitungsprogramm (PR) zugeordnet ist,
- Vergleichen des dreidimensionalen virtuellen Werkzeugmodells (M) mit der jeweiligen Referenzkontur (R) und/oder Vergleichen eines abhängig von dem virtuellen Werkzeugmodell (M) ermittelten, einer Kenngröße des Werkzeugs (16) entsprechenden Modellparameters (MP) mit dem jeweiligen Werkzeugparameter (MP) eines gespeicherten Werkzeugdatensatzes (WD),
- Auswählen des Werkzeugdatensatzes (WD), der dem dreidimensionalen virtuellen Werkzeugmodell (M) und/oder dem wenigstens einen Modellparameter (MP) entspricht, oder Erzeugen und Auswählen eines dem dreidimensionalen virtuellen Werkzeugmodell (M) und/oder dem wenigstens einen Modellparameter (MP) entsprechenden Werkzeugdatensatzes (WD),
- Erzeugen einer Werkzeugsollkontur (SK) durch Einpassen einer aus dem Werkzeugdatensatz (WD) ermittelten oder im Werkzeugdatensatz (WD) enthaltenen Referenzkontur (R) in das dreidimensionale virtuelle Werkzeugmodell (M) unter der Randbedingung, dass der Materialabtrag möglichst gering ist, wobei das Einpassen der Referenzkontur (R) in das virtuelle Werkzeugmodell (M) derart erfolgt, dass die Referenzkontur (R) durch Drehung und/oder Verschiebung und/oder Skalierung modifiziert wird, so dass sich eine modifizierte Referenzkontur (R*) ergibt, wobei diese modifizierte Referenzkontur (R*) innerhalb des virtuellen Werkzeugmodells (M) positioniert wird, so dass die Längsachsen der modifizierten Referenzkontur (R*) und des virtuellen Werkzeugmodells (M) übereinstimmen, und wobei die modifizierte Referenzkontur (R*) an den zu bearbeitenden Bereichen des Werkzeuges (16) nicht aus dem virtuellen Werkzeugmodell (M) herausragt,
- Materialabtragendes Bearbeiten des Werkzeugs (16) zur Erzeugung einer der Werkzeugsollkontur (SK) entsprechenden Werkzeugistkontur.

2. Verfahren nach Anspruch 1,
**dadurch gekennzeichnet, dass** das Verfahren zur Nachbearbeitung eines verschlissenen oder beschädigten, spanabhebenden Werkzeugs (16) eingerichtet ist.

3. Verfahren nach Anspruch 1 oder 2,
**dadurch gekennzeichnet, dass** das Verfahren zur Bearbeitung eines durch ein additives Fertigungsverfahren hergestellten Werkzeugrohlings eingerichtet ist.

4. Verfahren nach einem der vorhergehenden Ansprüche,
**dadurch gekennzeichnet, dass** das Verfahren zur Bearbeitung eines mit einer Beschichtung (42) versehenen Hartmetallwerkzeugs eingerichtet ist.

5. Verfahren nach einem der vorhergehenden Ansprüche,
**dadurch gekennzeichnet, dass** das Verfahren zur Bearbeitung eines Werkzeugs (16) mit einem Träger (43) und wenigstens einer an dem Träger (43) angeordneten Schneidplatte (44) eingerichtet ist.

6. Verfahren nach Anspruch 5,
**dadurch gekennzeichnet, dass** der Verlauf der radial äußeren Kante einer oder mehrerer Schneidplatten (44) durch die Bearbeitungseinheit (18) abhängig von der Sollkontur (SK) korrigiert wird.

7. Verfahren nach einem der vorhergehenden Ansprüche,
**dadurch gekennzeichnet, dass** beim Vergleich des dreidimensionalen virtuellen Werkzeugmodells (M) mit dem Werkzeugdatensatz (WD) eine Verschiebung und/oder Drehung der Referenzkontur (R) um wenigstens eine Achse eines Koordinatensystems relativ zu dem virtuellen Werkzeugmodells (M) durchgeführt wird.

8. Verfahren nach einem der vorhergehenden Ansprüche,
**dadurch gekennzeichnet, dass** die Referenzkontur (R) bei dem Erzeugen der Werkzeugsollkontur (SK) zumindest an einem oder mehreren Abschnitten verschoben und/oder gedreht und/oder skaliert wird.

9. Verfahren nach einem der vorhergehenden Ansprüche,
**dadurch gekennzeichnet, dass** bei dem Erzeugen der Werkzeugsollkontur (SK) das Einhalten wenigstens einer vorgegebenen Kenngröße für das Werkzeug als wenigstens eine weitere Randbedingung vorgegeben ist.

10. Verfahren nach einem der vorhergehenden Ansprüche,
**dadurch gekennzeichnet, dass** die die Differenz zwischen der Werkzeugsollkontur (SK) und dem dreidimensionalen virtuellen Werkzeugmodell (M) das abzutragende Materialvolumen beschreibt.

11. Verfahren nach einem der vorhergehenden Ansprüche,
**dadurch gekennzeichnet, dass** jeder Werkzeugdatensatz (WD) eine Referenzkontur (R) sowie wenigstens einen Werkzeugparameter (WP) aufweist.

12. Verfahren nach Anspruch 11,
**dadurch gekennzeichnet, dass** während des Vergleichs vor dem Auswählen des eines Werkzeugdatensatzes (WD) zunächst der wenigstens eine Modellparameter (MP) mit dem wenigstens einen Werkzeugparameter (WP) verglichen wird und ein Vergleich des dreidimensionalen virtuellen Werkzeugmodells (M) mit der Referenzkontur (R) nur für solche Werkzeugdatensätze (WD) erfolgt, bei denen der wenigstens eine Modellparameter (MP) mit dem wenigstens einen Werkzeugparameter (WD) übereinstimmt.

13. Verfahren nach einem der vorhergehenden Ansprüche,
**dadurch gekennzeichnet, dass** Ermitteln wenigstens eines Modellparameters (MP) anhand des dreidimensionalen virtuellen Werkzeugmodells (WD) mit folgenden Schritten erfolgt:
- Erzeugen und/oder Auswählen eines Messprogramms, wobei das Messprogramm wenigstens eine Schnittebene durch das dreidimensionale virtuelle Werkzeugmodell (M) und eine Messaufgabe vorgibt, mittels der der wenigstens einen zu bestimmenden Modellparameter (MP) anhand der wenigstens einen Schnittkontur zwischen der wenigstens einen Schnittebene und dem dreidimensionalen virtuellen Werkzeugmodell (M)bestimmt werden kann,
- Starten des Messprogramms und Ermitteln des wenigstens einen Modellparameters (MP) anhand der wenigstens einen Schnittkontur des dreidimensionalen virtuellen Werkzeugmodells (M) in der wenigstens einen Schnittebene.

14. Verfahren nach Anspruch 13,
**dadurch gekennzeichnet, dass** als Modellparameter (MP) ein Spanwinkel und/oder ein Freiwinkel und/oder ein Keilwinkel und/oder eine Schneidenanzahl und/oder ein Teilungswinkel und/oder eine Länge des Werkzeugs und/oder einen Kerndurchmesser und/oder einen Drallwinkel und/oder ein Eckenradius an einer Schneidkante ermittelt wird.

15. Verfahren nach einem der vorhergehenden Ansprüche,
**dadurch gekennzeichnet, dass** das Erstellen des dreidimensionalen virtuellen Werkzeugmodells (M) wie folgt durchgeführt wird:
- Erfassen des Werkzeugs (16) aus mehrere Richtungen und Erzeugen von Messdaten in Form einer Punktwolke (PW),
- Erzeugen des dreidimensionalen virtuellen Werkzeugmodells (M) des Werkzeugs (16) unter Verwendung der Punktwolke (PW).

16. Vorrichtung (15) zur materialabtragenden Bearbeitung eines Werkzeugs (16),
mit einer Bearbeitungseinheit (18), die dazu eingerichtet ist, das Werkzeug (16) materialabtragend zu bearbeiten,
mit wenigstens einer Messeinrichtung (23), die dazu eingerichtet ist, Messdaten für das Erzeugen eines dreidimensionalen virtuellen Werkzeugmodells (M) des Werkzeugs (16) zu erzeugen,
mit einer Speichereinheit (20), in der mehrere Werkzeugdatensätze (WD) gespeichert sind, die jeweils eine Referenzkontur (R) des Werkzeugs (16) und/oder wenigstens einen einer Kenngröße des Werkzeugs (16) entsprechenden Werkzeugparameter (MP) aufweisen, wobei jedem Werkzeugdatensatz (WD) jeweils ein Bearbeitungsprogramm (PR) zugeordnet ist,
und mit einer Steuereinheit (19), die dazu eingerichtet ist, die folgenden Schritte auszuführen oder zu steuern:
- Ausführen einer dreidimensionalen Messung des Werkzeugs (16) durch die wenigstens eine Messeinrichtung (23),
- Erzeugen eines dreidimensionalen virtuellen Werkzeugmodells (M) des Werkzeugs (16) aus den Messdaten der Messeinrichtung (23),
- Vergleichen des dreidimensionalen virtuellen Werkzeugmodells (M) mit der jeweiligen Referenzkontur (R) und/oder Vergleichen eines abhängig von dem virtuellen Werkzeugmodell (M) ermittelten, einer Kenngröße des Werkzeugs (16) entsprechenden Modellparameters (MP) mit dem jeweiligen Werkzeugparameter (MP) eines gespeicherten Werkzeugdatensatzes (WD),
- Auswählen des Werkzeugdatensatzes (WD), der dem dreidimensionalen virtuellen Werkzeugmodell (M) und/oder dem wenigstens einen Modellparameter (MP) entspricht, oder Erzeugen und Auswählen eines dem dreidimensionalen virtuellen Werkzeugmodell (M) und/oder dem wenigstens einen Modellparameter (MP) entsprechenden Werkzeugdatensatzes (WD),
- Erzeugen einer Werkzeugsollkontur (SK) durch Einpassen einer aus dem Werkzeugdatensatz (WD) ermittelten oder im Werkzeugdatensatz (WD) enthaltenen Referenzkontur (R) in das dreidimensionale virtuelle Werkzeugmodell (M) unter der Randbedingung, dass der Materialabtrag möglichst gering ist, wobei das Einpassen der Referenzkontur (R) in das virtuelle Werkzeugmodell (M) derart erfolgt, dass die Referenzkontur (R) durch Drehung und/oder Verschiebung und/oder Skalierung modifiziert wird, so dass sich eine modifizierte Referenzkontur (R*) ergibt, wobei diese modifizierte Referenzkontur (R*) innerhalb des virtuellen Werkzeugmodells (M) positioniert wird, so dass die Längsachsen der modifizierten Referenzkontur (R*) und des virtuellen Werkzeugmodells (M) übereinstimmen, und wobei die modifizierte Referenzkontur (R*) an den zu bearbeitenden Bereichen des Werkzeuges (16) nicht aus dem virtuellen Werkzeugmodell (M) herausragt,
- Materialabtragendes Bearbeiten des Werkzeugs (16) mittels der Bearbeitungseinheit (18) zur Erzeugung einer der Werkzeugsollkontur (SK) entsprechenden Werkzeugistkontur.

## Claims

1. Method (V) for machining a tool (16) by material removal, with the following steps:
- performance of a three-dimensional measurement of the tool (16) and production of a three-dimensional virtual tool model (M) of the tool (16) from the measurement data of the three-dimensional measurement,
- provision of several tool datasets (WD) each with a reference contour (R) of the tool (16) and/or with at least one tool parameter (MP) corresponding to a key value of the tool (16), wherein a machining program (PR) is assigned to each tool dataset (WD),
- comparison of the three-dimensional virtual tool model (M) with the respective reference contour (R), and/or comparison of a model parameter (MP), which corresponds to a key value of the tool (16) and is determined depending on the virtual tool model (M), with the respective tool parameter (MP) of a stored tool dataset (WD),
- selection of the tool dataset (WD) which corresponds to the three-dimensional virtual tool model (M) and/or the at least one model parameter (MP), or production and selection of a tool dataset (WD) which corresponds to the three-dimensional virtual tool model (M) and/or the at least one model parameter (MP),
- production of a nominal tool contour (SK) by integration of a reference contour (R), determined from the tool dataset (WD) or contained in the tool dataset (WD), into the three-dimensional virtual tool model (M) under the boundary condition that the material removal is as small as possible, wherein the reference contour (R) is integrated into the virtual tool model (M) such that the reference contour (R) is modified by rotation and/or displacement and/or scaling so as to give a modified reference contour (R*), wherein this modified reference contour (R*) is positioned inside the virtual tool model (M) so that the longitudinal axes of the modified reference contour (R*) and of the virtual tool model (M) coincide, and wherein the modified reference contour (R*) does not protrude from the virtual tool model (M) at the regions of the tool (16) to be machined,
- machining of the tool (16) by material removal to produce an actual tool contour corresponding to the nominal tool contour (SK).

2. Method according to claim 1, **characterised in that** the method is configured for re-machining a worn or damaged material-removal tool (16).

3. Method according to claim 1 or 2, **characterised in that** the method is configured for machining a tool blank produced by an additive production process.

4. Method according to any of the preceding claims, **characterised in that** the method is configured for machining a hard metal tool provided with a coating (42).

5. Method according to any of the preceding claims, **characterised in that** the method is configured for machining a tool (16) with a carrier (43) and at least one cutting insert (44) arranged on the carrier (43).

6. Method according to claim 5, **characterised in that** the course of the radially outer edge of one or more cutting inserts (44) through the machining unit (18) is corrected depending on the nominal contour (SK).

7. Method according to any of the preceding claims, **characterised in that** on comparison of the three-dimensional virtual tool model (M) with the tool dataset (WD), the reference contour (R) is displaced and/or rotated about at least one axis of a coordinate system relative to the virtual tool model (M).

8. Method according to any of the preceding claims, **characterised in that** on production of the nominal tool contour (SK), at least one or more portions of the reference contour are displaced and/or rotated and/or scaled.

9. Method according to any of the preceding claims, **characterised in that** on production of the nominal tool contour (SK), observation of at least one predefined key value for the tool is specified as at least one further boundary condition.

10. Method according to any of the preceding claims, **characterised in that** the difference between the nominal tool contour (SK) and the three-dimensional virtual tool model (M) describes the material volume to be removed.

11. Method according to any of the preceding claims, **characterised in that** each tool dataset (WD) has a reference contour (R) and at least one tool parameter (WP).

12. Method according to claim 11, **characterised in that** during the comparison before selection of the at least one tool dataset (WD), firstly the at least one model parameter (MP) is compared with the at least one tool parameter (WP), and a comparison is made between the three-dimensional virtual tool model (M) and the reference contour (R) only for those tool datasets (WD) in which the at least one model parameter (MP) matches the at least one tool parameter (WD).

13. Method according to any of the preceding claims, **characterised in that** at least one model parameter (MP) is determined from the three-dimensional virtual tool model (WD) with the following steps:
- production and/or selection of a measuring program, wherein the measuring program specifies at least one cutting plane through the three-dimensional virtual tool model (M) and a measurement task by means of which the at least one model parameter (MP) to be determined may be determined from the at least one cutting contour between the at least one cutting plane and three-dimensional virtual tool model (M),
- start of the measuring program and determination of the at least one model parameter (MP) from the at least one cutting contour of the three-dimensional virtual tool model (M) in the at least one cutting plane.

14. Method according to claim 13, **characterised in that** a cutting angle and/or a clearance angle and/or a wedge angle and/or a number of cuts and/or a division angle and/or a tool length and/or a core diameter and/or a helix angle and/or a corner radius at a cutting edge is determined as a model parameter (MP).

15. Method according to any of the preceding claims, **characterised in that** the three-dimensional virtual tool model (M) is produced as follows:
- assessment of the tool (16) from several directions and production of measurement data in the form of a scatter plot (PW),
- production of the three-dimensional virtual tool model (M) of the tool (16) using the scatter plot (PW).

16. Device (15) for machining of a tool (16) by material removal,
with a machining unit (18) which is configured to machine the tool (16) by material removal,
with at least one measuring device (23) which is configured to produce measurement data for production of a three-dimensional virtual tool model (M) of the tool (16), with a memory unit (20) in which several tool datasets (WD) are stored, each of which comprises a reference contour (R) of the tool (16) and/or at least one tool parameter (MP) corresponding to a key value of the tool (16), wherein a machining program (PR) is assigned to each tool dataset (WD),
and with a control unit (19) which is configured to perform or control the following steps:
- performance of a three-dimensional measurement of the tool (16) by the at least one measuring device (23),
- production of a three-dimensional virtual tool model (M) of the tool (16) from the measurement data of of the measuring device (23),
- comparison of the three-dimensional virtual tool model (M) with the respective reference contour (R), and/or comparison of a model parameter (MP), which corresponds to a key value of the tool (16) and is determined depending on the virtual tool model (M), with the respective tool parameter (MP) of a stored tool dataset (WD),
- selection of the tool dataset (WD) which corresponds to the three-dimensional virtual tool model (M) and/or the at least one model parameter (MP), or production and selection of a tool dataset (WD) which corresponds to the three-dimensional virtual tool model (M) and/or the at least one model parameter (MP),
- production of a nominal tool contour (SK) by integration of a reference contour (R), determined from the tool dataset (WD) or contained in the tool dataset (WD), into the three-dimensional virtual tool model (M) under the boundary condition that the material removal is as small as possible, wherein the reference contour (R) is integrated into the virtual tool model (M) such that the reference contour (R) is modified by rotation and/or displacement and/or scaling so as to give a modified reference contour (R*), wherein this modified reference contour (R*) is positioned inside the virtual tool model (M) so that the longitudinal axes of the modified reference contour (R*) and of the virtual tool model (M) coincide, and wherein the modified reference contour (R*) does not protrude from the virtual tool model (M) at the regions of the tool (16) to be machined,
- machining of the tool (16) by material removal by means of the machining unit (18) to produce an actual tool contour corresponding to the nominal tool contour (SK).

## Revendications

1. Procédé (V) d'usinage d'un outil (16) par enlèvement de matière, comprenant les étapes suivantes :
- réalisation d'une mesure tridimensionnelle de l'outil (16) et génération d'un modèle d'outil (M) virtuel tridimensionnel de l'outil (16), à partir des données de mesure issues de la mesure tridimensionnelle,
- mise à disposition de plusieurs ensembles de données d'outil (WD) avec respectivement un contour de référence (R) de l'outil (16) et/ou avec au moins un paramètre d'outil (MP) correspondant à une caractéristique de l'outil (16), un programme d'usinage (PR) étant associé respectivement à chaque ensemble de données d'outil (WD),
- comparaison du modèle d'outil (M) virtuel tridimensionnel avec le contour de référence (R) respectif et/ou comparaison d'un paramètre d'outil (MP), déterminé en fonction du modèle d'outil (M) virtuel et correspondant à une caractéristique de l'outil (16), avec le paramètre d'outil (MP) respectif d'un ensemble de données d'outil (WD) enregistré,
- sélection de l'ensemble de données d'outil (WD) qui correspond au modèle d'outil (M) virtuel tridimensionnel et/ou au paramètre d'outil (MP), au nombre d'au moins un, ou génération et sélection d'un ensemble de données d'outil (WD) correspondant au modèle d'outil (M) virtuel tridimensionnel et/ou au paramètre d'outil (MP), au nombre d'au moins un,
- génération d'un contour d'outil de consigne (SK), par insertion d'un contour de référence (R), déterminé à partir de l'ensemble de données d'outil (WD) ou contenu dans l'ensemble de données d'outil (WD), dans le modèle d'outil (M) virtuel tridimensionnel, avec la condition additionnelle d'un enlèvement de matière aussi faible que possible, sachant que l'insertion du contour de référence (R) dans le modèle d'outil (M) virtuel est réalisée de manière à ce que le contour de référence (R) soit modifié par rotation et/ou translation et/ou redimensionnement, de façon à obtenir un contour de référence modifié (R*), sachant que ce contour de référence modifié (R*) est positionné à l'intérieur du modèle d'outil (M) virtuel de manière à ce que les axes longitudinaux du contour de référence modifié (R*) et du modèle d'outil (M) virtuel coïncident, et sachant que le contour de référence modifié (R*) ne dépasse pas du modèle d'outil (M) virtuel dans les zones de l'outil qui doivent être usinées,
- usinage de l'outil (16) par enlèvement de matière, aux fins de génération d'un contour d'outil réel correspondant au contour d'outil de consigne (SK).

2. Procédé selon la revendication 1, **caractérisé en ce que** le procédé est conçu pour l'usinage de reprise d'un outil à enlèvement de matière (16) usé ou détérioré.

3. Procédé selon la revendication 1 ou 2, **caractérisé en ce que** le procédé est conçu pour l'usinage d'une ébauche d'outil réalisée par un procédé de fabrication additive.

4. Procédé selon une des revendications précédentes, **caractérisé en ce que** le procédé est conçu pour l'usinage d'un outil en métal dur pourvu d'un revêtement (42).

5. Procédé selon une des revendications précédentes, **caractérisé en ce que** le procédé est conçu pour l'usinage d'un outil (16) avec un support (43) et au moins une plaquette de coupe (44) disposée sur le support (43).

6. Procédé selon la revendication 5, **caractérisé en ce que** le tracé de l'arête radialement extérieure d'une ou plusieurs plaquettes de coupe (44) est corrigé par l'unité d'usinage (18), en fonction du contour de consigne (SK).

7. Procédé selon une des revendications précédentes, **caractérisé en ce que** la comparaison du modèle d'outil (M) virtuel tridimensionnel avec l'ensemble de données d'outil (WD) donne lieu à une translation et/ou à une rotation du contour de référence (R) autour d'au moins un axe d'un système de coordonnées, par rapport au modèle d'outil (M) virtuel.

8. Procédé selon une des revendications précédentes, **caractérisé en ce que** lors de la génération du contour d'outil de consigne (SK), le contour de référence (R) est déplacé en translation et/ou tourné et/ou redimensionné au moins dans une ou plusieurs zones.

9. Procédé selon une des revendications précédentes, **caractérisé en ce que** lors de la génération du contour d'outil de consigne (SK), le respect d'au moins une caractéristique prédéterminée pour l'outil est prédéfini en tant qu'au moins une condition additionnelle supplémentaire.

10. Procédé selon une des revendications précédentes, **caractérisé en ce que** la différence entre le contour d'outil de consigne (SK) et le modèle d'outil (M) virtuel tridimensionnel décrit le volume de matière à enlever.

11. Procédé selon une des revendications précédentes, **caractérisé en ce que** chaque ensemble de données d'outil (WD) présente un contour de référence (R) ainsi qu'au moins un paramètre d'outil (WP).

12. Procédé selon la revendication 11, **caractérisé en ce que** pendant la comparaison et avant la sélection de l'ensemble de données d'outil (WD), au nombre d'au moins un, on compare d'abord le paramètre de modèle (MP), au nombre d'au moins un, avec le paramètre d'outil (WP), au nombre d'au moins un, et on procède à une comparaison du modèle d'outil (M) virtuel tridimensionnel avec le contour de référence (R), uniquement pour les ensembles de données d'outil (WD) où le paramètre de modèle (MP), au nombre d'au moins un, concorde avec le paramètre d'outil (WP), au nombre d'au moins un.

13. Procédé selon une des revendications précédentes, **caractérisé en ce que** la détermination d'au moins un paramètre de modèle (MP) à l'aide du modèle d'outil (M) virtuel tridimensionnel est réalisée avec les étapes suivantes :
- génération et/ou sélection d'un programme de mesure, le programme de mesure prédéfinissant au moins un plan de coupe à travers le modèle d'outil (M) virtuel tridimensionnel, ainsi qu'une opération de mesure permettant de déterminer le paramètre de modèle (MP), au nombre d'au moins un, devant être déterminé, à l'aide du contour de coupe, au nombre d'au moins un, entre le plan de coupe, au nombre d'au moins un, et le modèle d'outil (M) virtuel tridimensionnel,
- démarrage du programme de mesure et détermination du paramètre de modèle (MP), au nombre d'au moins un, à l'aide du contour de coupe, au nombre d'au moins un, du modèle d'outil (M) virtuel tridimensionnel, dans le plan de coupe, au nombre d'au moins un.

14. Procédé selon la revendication 13, **caractérisé en ce que** l'on détermine comme paramètre de modèle (MP), un angle de coupe et/ou un angle de dépouille et/ou un angle de bec et/ou un nombre de tranchants et/ou un pas angulaire et/ou une longueur de l'outil et/ou un diamètre de noyau et/ou un angle de torsion et/ou un rayon d'angle sur une arête de coupe.

15. Procédé selon une des revendications précédentes, **caractérisé en ce que** la réalisation du modèle d'outil (M) virtuel tridimensionnel est effectuée de la manière suivante :
- mesure de l'outil (16) depuis plusieurs directions, et génération de données de mesure sous la forme d'un nuage de points,
- génération du modèle d'outil (M) virtuel tridimensionnel de l'outil (16) en utilisant le nuage de points,

16. Dispositif (15) destiné à l'usinage par enlèvement de matière d'un outil (16),
comprenant une unité d'usinage (18) qui est conçue pour usiner l'outil (16) par enlèvement de matière,
comprenant au moins un dispositif de mesure (23) qui est conçu pour générer des données de mesure en vue de la génération d'un modèle d'outil (M) virtuel tridimensionnel de l'outil (16),
comprenant une unité de mémoire (20) dans laquelle sont enregistrés plusieurs ensembles de données d'outil (WD) qui présentent chacun un contour de référence (R) de l'outil (16) et/ou au moins un paramètre d'outil (WP) correspondant à une caractéristique de l'outil (16), un programme d'usinage (PR) étant associé à chaque ensemble de données d'outil (WD),
et comprenant une unité de commande (19) qui est conçue pour exécuter ou commander les étapes suivantes :
- réalisation d'une mesure tridimensionnelle de l'outil (16) par le dispositif de mesure (23), au nombre d'au moins un,
- génération d'un modèle d'outil (M) virtuel tridimensionnel de l'outil (16), à partir des données de mesure du dispositif de mesure (23),
- comparaison du modèle d'outil (M) virtuel tridimensionnel avec le contour de référence (R) respectif et/ou comparaison d'un paramètre d'outil (MP), déterminé en fonction du modèle d'outil (M) virtuel et correspondant à une caractéristique de l'outil (16), avec le paramètre d'outil (MP) respectif d'un ensemble de données d'outil (WD) enregistré,
- sélection de l'ensemble de données d'outil (WD) qui correspond au modèle d'outil (M) virtuel tridimensionnel et/ou au paramètre d'outil (MP), au nombre d'au moins un, ou génération et sélection d'un ensemble de données d'outil (WD) correspondant au modèle d'outil (M) virtuel tridimensionnel et/ou au paramètre d'outil (MP), au nombre d'au moins un,
- génération d'un contour d'outil de consigne (SK), par insertion d'un contour de référence (R), déterminé à partir de l'ensemble de données d'outil (WD) ou contenu dans l'ensemble de données d'outil (WD), dans le modèle d'outil (M) virtuel tridimensionnel, avec la condition additionnelle d'un enlèvement de matière aussi faible que possible, sachant que l'insertion du contour de référence (R) dans le modèle d'outil (M) virtuel est réalisée de manière à ce que le contour de référence (R) soit modifié par rotation et/ou translation et/ou redimensionnement, de façon à obtenir un contour de référence modifié (R*), sachant que ce contour de référence modifié (R*) est positionné à l'intérieur du modèle d'outil (M) virtuel de manière à ce que les axes longitudinaux du contour de référence modifié (R*) et du modèle d'outil (M) virtuel coïncident, et sachant que le contour de référence modifié (R*) ne dépasse pas du modèle d'outil (M) virtuel dans les zones de l'outil qui doivent être usinées,
- usinage de l'outil (16) par enlèvement de matière à laide de l'unité d'usinage (18), aux fins de génération d'un contour d'outil réel correspondant au contour d'outil de consigne (SK).
